# EUROPÄISCHE PATENTANMELDUNG

(11) **EP 1 129 654 A1**
(43) Veröffentlichungstag der Anmeldung: **05.09.2001**
(21) Anmeldenummer: 01104867.5
(22) Anmeldetag: 28.02.2001
(51) Int. Cl.: A47J 37/06, F24C 7/06

(54) **Vorrichtung mit zumindest einem Heizelement, insbesondere zum Backen, Grillen und/oder Toasten von Lebesmitteln**

(30) Priorität: 03.03.2000 DE 10010627
(71) Anmelder: BSH Bosch und Siemens Hausgeräte GmbH, 81669 München (DE)
(72) Erfinder: Fränzel, Bernd, 83301 Traunreut (DE); Sturm, Robert, 83352 Altenmarkt (DE); Heberle, Hildegard, 83371 Stein/Traun (DE)

(57) **Zusammenfassung**

Die Erfindung geht aus von einer Vorrichtung mit zumindest einem Heizelement (10) oberhalb eines Ablagebereichs (12) und einem Heizelement (14) unterhalb des Ablagebereichs (12), insbesondere zum Grillen, Backen und/oder Toasten von Lebensmitteln (16).

Es wird vorgeschlagen, daß zumindest ein Heizelement (14) höhenverstellbar und ein Abstand zwischen den Heizelementen (10, 14) einstellbar ist.

## Beschreibung

Die Erfindung geht aus von einer Vorrichtung mit zumindest einem Heizelement, insbesondere zum Backen, Grillen und/oder Toasten von Lebensmitteln, nach den Oberbegriffen der unabhängigen Ansprüche.

Bekannt sind Tischgeräte mit einem Heizelement oberhalb und einem Heizelement unterhalb eines Ablagebereichs, mittels denen Lebensmittel gebacken, getoastet und gegrillt werden können. Um das Tischgerät auf die verschiedenen Zubereitungsarten einzustellen, ist die Heizleistung der Tischgeräte einstellbar und die Lebensmittel können in unterschiedlichen Höhen im Ablagebereich angeordnet werden. Hierfür sind in der Regel mehrere Schienen in unterschiedlichen Höhen an Seitenwänden des Ablagebereichs befestigt oder angeformt, in die ein Backblech oder ein Gitterrost eingeschoben werden kann.

Die Aufgabe der Erfindung besteht darin, eine gattungsgemäße Vorrichtung weiterzuentwickeln und insbesondere deren Zubereitungsergebnisse zu verbessern. Die Aufgabe wird erfindungsgemäß jeweils durch die Merkmale der unabhängigen Ansprüche gelöst, während vorteilhafte Ausgestaltungen und Weiterbildungen der Erfindung den Unteransprüchen entnommen werden können.

Die Erfindung geht aus von einer Vorrichtung mit zumindest einem Heizelement oberhalb eines Ablagebereichs und einem Heizelement unterhalb des Ablagebereichs, insbesondere zum Grillen, Backen und/oder Toasten von Lebensmitteln.
Es wird vorgeschlagen, daß zumindest ein Heizelement höhenverstellbar und ein Abstand zwischen den Heizelementen einstellbar ist. Der Abstand zwischen den Heizelementen und zu einem aufzubereitenden Lebensmittel kann abhängig von Eigenschaften des Lebensmittels und insbesondere abhängig von einer gewünschten Zubereitungsart eingestellt werden, beispielsweise kann beim Toasten ein beidseitig kleiner Abstand mit hoher Hitze, beim Backen ein großer Abstand mit mäßiger Hitze und beim Aufbacken und Auftauen ein großer Abstand mit hoher Hitze eingestellt werden. Möglich ist auch, daß das aufzubereitende Lebensmittel zwischen den beiden Heizelementen eingespannt wird. Durch die einstellbaren Abstände können die Zubereitungsergebnisse erheblich verbessert werden.

Ferner kann es von Vorteil sein, beide Heizelemente, und zwar das Heizelement oberhalb und das Heizelement unterhalb des Ablagebereichs, höhenverstellbar auszuführen, wodurch eine besonders hohe Flexibilität, insbesondere während des Zubereitungsvorgangs, erreicht werden kann.

Das Heizelement kann durch verschiedene, dem Fachmann als sinnvoll erscheinende konstruktive Lösungen höhenverstellbar ausgeführt werden, beispielsweise indem das Heizelement von Hand in verschieden hohe Rastelemente eingehängt werden kann. In einer Ausgestaltung der Erfindung wird vorgeschlagen, daß zumindest ein Heizelement über einen Verstellmechanismus an einem Gehäuseteil abgestützt und das Heizelement mit einem Bedienelement über den Verstellmechanismus höhenverstellbar ist. Durch den Verstellmechanismus kann ein besonders komfortables Verstellen erreicht werden, insbesondere ohne daß ein Benutzer der Hitze ausgesetzt wird. Der Verstellmechanismus kann vom Benutzer angetrieben sein, beispielsweise indem der Verstellmechanismus von einem Hebelgetriebe und/oder Zahnradgetriebe gebildet ist, das vom Benutzer über einen Stellhebel oder über ein Stellrad angetrieben werden kann.

Ferner wird vorgeschlagen, daß ein Abstand zwischen zumindest einem Heizelement und einem in den Ablagebereich eingebrachten Gegenstand über einen motorbetriebenen Verstellmechanismus verstellbar ist. Über den motorbetriebenen Verstellmechanismus kann eine Ablagefläche für einen Gegenstand, ein Heizelement oberhalb des Ablagebereichs und/oder ein Heizelement unterhalb des Ablagebereichs höhenverstellbar ausgeführt werden. Die Zubereitungsergebnisse können durch die Abstandseinstellung bei gleichzeitig hohem Komfort verbessert werden.

Der Verstellmechanismus kann von verschiedenen Motoren angetrieben sein, insbesondere von einem Elektromotor, dessen Drehmoment hydraulisch und/oder mechanisch in eine Stellbewegung umgesetzt werden kann. Um eine platzsparende Konstruktion zu erreichen, kann es von Vorteil sein, den Motor des Verstellmechanismus einstückig mit einem bereits vorhandenen Motor auszuführen, beispielsweise mit einem Lüftermotor usw. Neben den dargestellten Verstellmechanismen sind zahlreiche weitere, dem Fachmann als sinnvoll erscheinende Verstellmechanismen denkbar.

Der Komfort kann weiter gesteigert werden, indem eine Steuereinrichtung abhängig von einer ausgewählten Zubereitungsart über den Verstellmechanismus einen Abstand zwischen zumindest einem Heizelement und dem eingebrachten Gegenstand automatisch einstellt. Es kann stets eine vorteilhafte Einstellung erreicht und der Aufwand eines Benutzers kann reduziert werden. Um den Abstand auf bestimmte aufzubereitende Lebensmittel speziell einstellen zu können, kann es sinnvoll sein, die Automatik ein- und ausschaltbar und vom Benutzer nachregelbar auszuführen.

In einer weiteren Ausgestaltung der Erfindung wird vorgeschlagen, daß über zumindest einen Sensor wenigstens eine Kenngröße von dem in den Ablagebereich eingebrachten Gegenstand erfaßbar ist, beispielsweise über einen Infrarotsensor Temperaturwerte und/ oder über einen optischen Sensor eine Farbe und/oder eine Farbänderung usw. Die Kenngröße kann an einen Benutzer und/oder besonders vorteilhaft an eine Steuereinrichtung weitergeleitet werden. Abhängig von der Kenngröße kann vom Benutzer und/ oder besonders vorteilhaft von der Steuereinrichtung eine automatische Abstandsänderung und/oder Temperaturänderung eingeleitet werden. In der Steuereinrichtung kann zudem ein Regler integriert sein.

In einer weiteren Ausgestaltung wird vorgeschlagen, daß über eine Dampfvorrichtung Wasserdampf in den Ablagebereich führbar ist. Das Wasser wird dabei vorteilhaft von einem vorhandenen Heizelement verdampft. Insbesondere beim Aufbacken und beim Auftauen von Lebensmitteln kann dem Lebensmittel verlorene Flüssigkeit wieder dosiert zugeführt und das Zubereitungsergebnis im Vergleich ohne Dampf verbessert werden. Ferner können die Zubereitungsergebnisse verbessert werden, indem der Ablagebereich nach außen durch ein Gehäuse verschließbar und die Luft im Gehäuse durch eine Umwälzvorrichtung umwälzbar ist. Speziell eine Kombination mit einer Dampfvorrichtung und einer Umwälzvorrichtung kann besonders vorteilhafte Effekte bewirken, und zwar kann durch die Umwälzvorrichtung die erhitzte Luft und der Wasserdampf gleichmäßig verteilt und durch den Wasserdampf kann ein durch die Luftbewegung unterstütztes Austrocknen des aufzubereitenden Lebensmittels sicher vermieden werden.

Die erfindungsgemäße Lösung kann bei verschiedenen, dem Fachmann als sinnvoll erscheinenden Vorrichtungen eingesetzt werden, wie beispielsweise bei Backöfen, Grillgeräten usw. und besonders vorteilhaft bei kombinierten Toast-, Back- und Grillgeräten zum Aufbereiten von Lebensmitteln.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung zum Backen, Grillen und Toasten von Lebensmitteln und
- Fig. 2: eine Variante nach Fig. 1 mit einem motorbetriebenen Verstellmechanismus.

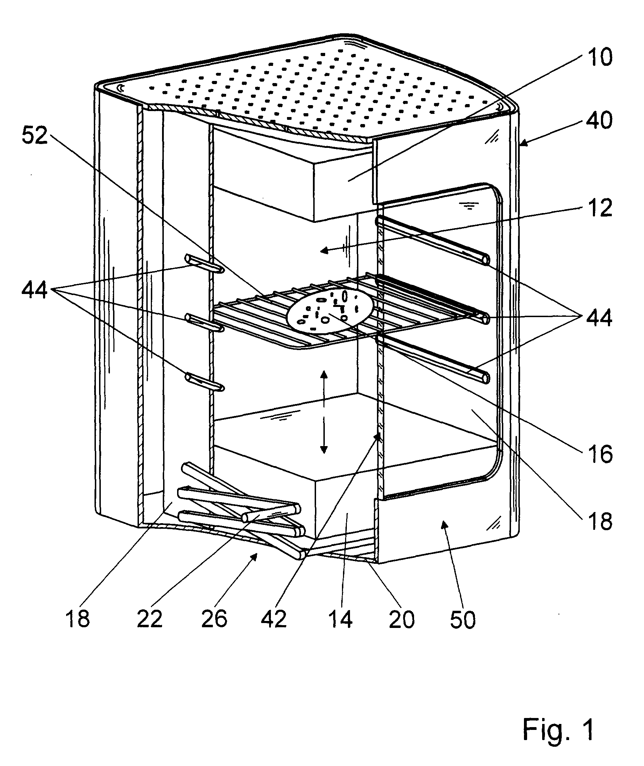

Fig. 1 zeigt eine Vorrichtung zum Backen, Grillen und Toasten von Lebensmitteln 16 mit einem Heizelement 10 oberhalb eines Ablagebereichs 12 und einem Heizelement 14 unterhalb des Ablagebereichs 12. Der Ablagebereich 12 ist von einem Gehäuse 40 mit einer Tür 50 umgeben, wobei in der Tür 50 ein Sichtfenster 42 eingebracht ist. An Gehäusewänden 18 sind im Ablagebereich 12 Schienen 44 befestigt, in die ein Gitterrost 52 in verschiedenen Höhen bzw. mit verschiedenen Abständen zu den Heizelementen 10, 14 eingeschoben werden kann.

Erfindungsgemäß ist das untere Heizelement 14 über einen mechanischen Verstellmechanismus 26 an einem Gehäuseboden 20 des Gehäuses 40 und an den Gehäusewänden 18 abgestützt, und zwar über ein Scherengitter. Der Verstellmechanismus 26 kann über einen Hebel 22 betätigt werden, der durch ein nicht näher dargestelltes, sich senkrecht erstreckendes Langloch aus dem Gehäuse 40 nach außen ragt. Mit dem Hebel 22 kann über den Verstellmechanismus 26 das Heizelement 14 in seiner Höhe stufenlos verstellt werden. Der Abstand zwischen den Heizelementen 10, 14 und von den Heizelementen 10, 14 zu dem aufzubereitenden Lebensmittel 16 kann vorteilhaft auf eine gewünschte Zubereitungsart abgestimmt werden, beispielsweise kann beim Toasten ein kleiner Abstand, beim Backen ein großer Abstand und beim Aufbacken und Auftauen ebenfalls ein großer Abstand zwischen den Heizelementen 10, 14 eingestellt werden.

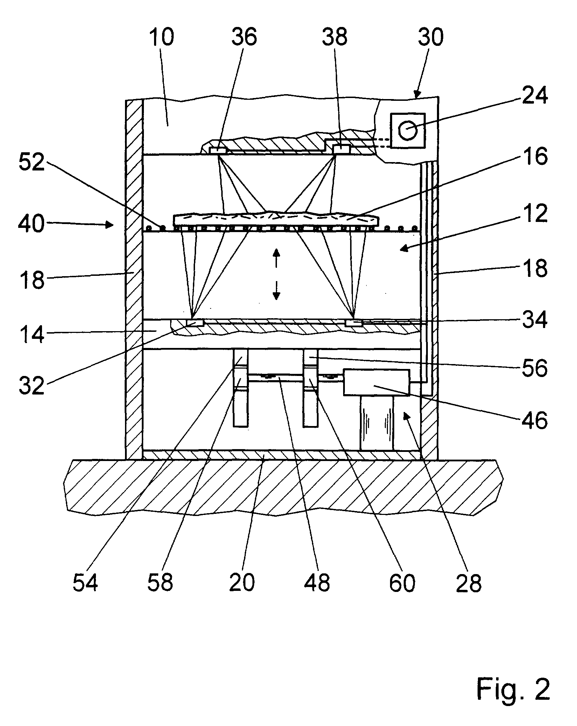

In Fig. 2 ist eine alternative Vorrichtung mit einem motorbetriebenen Verstellmechanismus 28 schematisch dargestellt. Im wesentlichen gleichbleibende Bauteile sind grundsätzlich mit den gleichen Bezugszeichen beziffert. Ferner kann bezüglich gleichbleibender Merkmale und Funktionen auf die Beschreibung zum Ausführungsbeispiel in Fig. 1 verwiesen werden.

Das Heizelement 14 ist über den Verstellmechanismus 28 auf dem Gehäuseboden 20 abgestützt. Der Verstellmechanismus 28 besitzt einen Elektromotor 46, der über eine Antriebswelle 48, über zwei Zahnräder 58, 60 und über zwei Zahnstangen 54, 56 auf das zwischen den Gehäusewänden 18 verschiebbar gelagerte Heizelement 14 wirkt. Neben dem unteren Heizelement 14 könnte das obere Heizelement und/oder eine Ablagefläche für die Lebensmittel 16 über einen motorbetriebenen Verstellmechanismus verstellbar ausgeführt werden.

Der Verstellmechanismus 28 kann über ein Bedienelement 24 unabhängig von einer gewünschten Zubereitungsart betätigt werden. Mit dem Bedienelement 24 kann über den Verstellmechanismus 28 das Heizelement 14 in seiner Höhe stufenlos verstellt bzw. kann über das Bedienelement 24 und den Verstellmechanismus 28 ein Abstand zwischen den Heizelementen 10, 14 stufenlos eingestellt werden. Ferner kann am Bedienelement 24 eine Automatik aktiviert werden, so daß eine im Bedienelement 24 integrierte Steuer- und Regeleinrichtung 30 abhängig von einer ausgewählten Zubereitungsart über den Verstellmechanismus 28 einen Abstand zwischen dem Heizelement 14 und einem in den Ablagebereich 12 eingebrachten Lebensmittel 16 automatisch einstellt.

In den Heizelementen 10, 14 sind zudem Infrarotsensoren 32, 34, 36, 38 integriert über die Temperaturwerte von dem in den Ablagebereich 12 eingebrachten Lebensmittel erfaßbar sind, und zwar über die im oberen Heizelement 10 integrierten Infrarotsensoren 36, 38 Temperaturwerte von einer Oberseite des Lebensmittels 16 und über die im unteren Heizelement 14 integrierten Infrarotsensoren 32, 34 Temperaturwerte von einer Unterseite des Lebensmittels 16.

Über das Bedienelement 24 kann eine Automatik aktiviert werden, so daß die Steuer- und Regeleinrichtung 30 abhängig von den erfaßten Temperaturwerten über den Verstellmechanismus 28 einen Abstand zwischen dem Heizelement 14 und dem eingebrachten Lebensmittel 16 und eine Heizleistung jeweils von den Heizelementen 10, 14 automatisch einstellt.

### Bezugszeichen

- 10: Heizelement
- 12: Ablagebereich
- 14: Heizelement
- 16: Lebensmittel
- 18: Gehäuseteil
- 20: Gehäuseteil
- 22: Bedienelement
- 24: Bedienelement
- 26: Verstellmechanismus
- 28: Verstellmechanismus
- 30: Steuereinrichtung
- 32: Sensor
- 34: Sensor
- 36: Sensor
- 38: Sensor
- 40: Gehäuse
- 42: Sichtfenster
- 44: Schiene
- 46: Elektromotor
- 48: Antriebswelle
- 50: Tür
- 52: Gitterrost
- 54: Zahnstange
- 56: Zahnstange
- 58: Zahnrad
- 60: Zahnrad

## Patentansprüche

1. Vorrichtung mit zumindest einem Heizelement (10) oberhalb eines Ablagebereichs (12) und einem Heizelement (14) unterhalb des Ablagebereichs (12), insbesondere zum Grillen, Backen und/oder Toasten von Lebensmitteln (16), **dadurch gekennzeichnet**, daß zumindest ein Heizelement (14) höhenverstellbar und ein Abstand zwischen den Heizelementen (10, 14) einstellbar ist.

2. Vorrichtung nach Anspruch 1, **dadurch gekennzeichnet**, daß zumindest ein Heizelement (14) über einen Verstellmechanismus (26, 28) an einem Gehäuseteil (18, 20) abgestützt und das Heizelement (14) mit einem Bedienelement (22, 24) über den Verstellmechanismus (26, 28) höhenverstellbar ist.

3. Vorrichtung mit zumindest einem Heizelement (10, 14) und einem Ablagebereich (12), insbesondere zum Grillen Backen und/oder Toasten von Lebensmitteln (16), **dadurch gekennzeichnet**, daß ein Abstand zwischen dem Heizelement (14) und einem in den Ablagebereich eingebrachten Gegenstand (16) über einen motorbetriebenen Verstellmechanismus (28) verstellbar ist.

4. Vorrichtung nach Anspruch 3, **dadurch gekennzeichnet**, daß eine Steuereinrichtung (30) abhängig von einer ausgewählten Zubereitungsart über den Verstellmechanismus (28) einen Abstand zwischen zumindest einem Heizelement (14) und dem eingebrachten Gegenstand (16) automatisch einstellt.

5. Vorrichtung nach einem der vorhergehenden Ansprüche, **dadurch gekennzeichnet**, daß über zumindest einen Sensor (32, 34, 36, 38) wenigstens eine Kenngröße von einem in den Ablagebereich (12) eingebrachten Gegenstand 16) erfaßbar ist.

6. Vorrichtung nach Anspruch 3 oder 4 und 5, **dadurch gekennzeichnet**, daß eine Steuereinrichtung (30) abhängig von der vom Sensor (32, 34, 36, 38) erfaßten Kenngröße über den Verstellmechanismus (28) einen Abstand zwischen zumindest einem Heizelement (14) und dem eingebrachten Gegenstand (16) automatisch einstellt.

7. Vorrichtung nach einem der vorhergehenden Ansprüche, **dadurch gekennzeichnet**, daß über eine Dampfvorrichtung Wasserdampf in den Ablagebereich führbar ist.

8. Vorrichtung nach einem der vorhergehenden Ansprüche, **dadurch gekennzeichnet**, daß der Ablagebereich nach außen durch ein Gehäuse verschließbar und die Luft im Gehäuse durch eine Umwälzvorrichtung umwälzbar ist.
